# EUROPEAN PATENT SPECIFICATION

(11) **EP 2 381 337 B1**
(45) Date of publication and mention of the grant of the patent: **27.01.2016**
(21) Application number: 10160877.6
(22) Date of filing: 23.04.2010
(51) Int. Cl.: G06F 3/01, G06F 3/041

(54) **PORTABLE ELECTRONIC DEVICE WITH A TOUCH SENSITIVE DISPLAY AND METHOD FOR TESTING AND CONTROLLING THE SAME**
TRAGBARE ELEKTRONISCHE VORRICHTUNG MIT BERÜHRUNGSEMPFINDLICHE ANZEIGE UND TEST- UND STEUERUNGSVERFAHREN DAFÜR
DISPOSITIF ÉLECTRONIQUE PORTABLE AVEC UN ÉCRAN TACTILE ET SON PROCÉDÉ DE TEST ET DE COMMANDE

(43) Date of publication of application: 26.10.2011
(73) Proprietor: BlackBerry Limited, Waterloo, ON N2K 0A7 (CA)
(72) Inventor: Pertuit Michael, Joseph, Irving, TX 75039 (US); Brogle, Richard, James, Irving, TX 75039 (US); Tong, Kuo-Feng, Waterloo Ontario N2L 5R9 (CA); Parco, Adam, Louis, Waterloo Ontario N2L 5R9 (CA)
(74) Representative: MERH-IP Matias Erny Reichl Hoffmann Patentanwälte PartG mbB

(56) References cited:
- EP-A1- 0 640 936
- EP-A2- 0 528 598
- WO-A2-2008/009687
- US-A1- 2009 315 835
- US-A1- 2010 097 336

## Description

### FIELD OF TECHNOLOGY

The present disclosure relates to portable electronic devices, including but not limited to portable electronic devices having touch screen displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

United States Patent Application US 2009/0315835 discloses a method that includes driving a current through a touch screen that is based on contact of the touch screen, generating a proportional second current, and detecting contact of the touch screen from the second current. Another method includes providing a touch screen with parallel plates, disabling contact detection when a plate voltage is lower than a threshold voltage, and enabling contact detection when the plate voltage is at least equal to the threshold voltage. A device includes a first node and a second node coupled to a touch screen, a third node, a first current mirror coupled to the second node and the third node configured to generate a current at the third node that is proportional to a second current at the second node, and a detection circuit that provides a signal based on the first current that indicates contact of the touch screen.

International Patent Application WO 2008/009687 discloses an input device with a film-based pressure sensor build from a first carrier film, a second carrier film and a spacer arranged between the carrier films for keeping them at a distance from one another. The spacer has an opening delimiting an active zone, in which first and second electrodes are arranged in such a way that, in response to a compressive force acting on the active zone, an electrical contact is established between the first and second electrodes. A control circuit able to operate in at least a first and a second mode of operation is configured so as to measure, in the first mode of operation, a quantity indicative of electrical resistance between the first and second electrodes for detecting an amount or a position of a compressive force acting on the active zone and, in the second mode of operation, a quantity indicative of a capacitance for detecting a person or an object approaching thereto.

European Patent Application EP 0 528 598 discloses a digitizer apparatus that including fault detection apparatus which includes a source for energizing the digitizer, and an analog-to-digital converter coupled to the digitizer and to the source. Further, a controller means is provided for coupling to the output of the analog-to-digital converter along with analog switches controlled by the controller for connecting the source and the analog-to-digital converter to the digitizer. A non-volatile memory is coupled to the controller along with an indicator so as to provide information about digitizer operability. A plurality of test electrodes within the digitizer can be selectively coupled to the analog-to-digital converter and a wiring harness connects the switches, the analog-to-digital converter and the source to the digitizer such that various voltage readings can be taken at predetermined locations on a conductive layer of the digitizer.

United States Patent Application US 2010/0097336 discloses touch sensing circuit arrangements that include a touch sensor and a controller board. The touch sensor includes one or more sensing elements to generate touch-related signals responsive to a touch input to the sensor, and a memory device storing computer-executable firmware instructions for determining touch positions based on the touch-related signals. The controller board includes query logic executable by the controller board to cause the controller board to query for the computer-executable firmware instructions stored on the memory device of the touch sensor, and a processor circuit to determine touch positions by executing the firmware instructions loaded onto the generic controller board in response to the query.

European Patent Application EP 0 640 936 discloses a data processing device that comprises a touch screen with a touch position sensor. The position sensor is suitable to detect a touch position on the screen from a change in a current pattern in a conductive panel. The device also comprises a touch force sensor provided with a second conductive panel which extends substantially parallel to the touch screen. The screen is at least partly movable relative to the second panel in a direction transversely of the second panel. The force sensor is suitable to determine a force from a capacitance value between the touch screen and the second panel. The device is suitable for the combined processing of the position and force detected in response to touching. The inclusion of force sensors, optionally complementing a touch-sensitive display, facilitates further functions and operations of the device.

### SUMMARY

A method includes determining first respective values representative of forces applied by a plurality of actuators to a touch-sensitive display of an electronic device, the plurality of actuators being arranged between the back of the electronic device and the touch-sensitive display, controlling the actuators, by a controller of the electronic device, to cause the actuators to change the forces applied to the touch-sensitive display by applying a voltage to the actuators, determining second respective values representative of the forces applied by the actuators to the touch-sensitive display, and determining when there is a fault in one of the actuators by comparing changes from the first respective values to the second respective values to an expected value.

A computer-readable medium has computer-readable code executable by at least one processor of a portable electronic device to perform the above method.

An electronic device includes a touch-sensitive display, a plurality of actuators, being arranged between the back of the electronic device and the touch-sensitive display, configured to apply forces to the touch-sensitive display, by a controller of the electronic device, force sensors configured to determine values representative of the forces applied by the plurality of actuators, and at least one processor operably connected to the touch-sensitive display, the actuators, and the force sensors and configured to carry out the above method.

### BRIEF DESCRIPTION OFTHE DRAWINGS

Embodiments of the present disclosure will now be described, by way of example only, with reference to the attached Figures, wherein:
FIG. 1 is a block diagram of a portable electronic device in accordance with an example embodiment;
FIG. 2 illustrates a front view of a portable electronic device in accordance with an example embodiment;
FIG. 3 illustrates a cross-sectional view through the line 202 of FIG. 2;
FIG. 4 is a functional block diagram showing components of the portable electronic device in accordance with an example embodiment;
FIG. 5 is a flow chart illustrating a method of controlling a portable electronic device in accordance with an example embodiment;
FIG. 6 illustrates an example screen shot of a portable electronic device in accordance with an example embodiment;
FIG. 7 is a flow chart illustrating a method of controlling a portable electronic device in accordance with another example embodiment; and
FIG. 8 is a flow chart illustrating a method of controlling a portable electronic device in accordance with another example embodiment.

### DETAI LED DESCRI PTI ON

The following describes an electronic device and a method including determining first respective values representative of forces applied by a plurality of actuators to a touch-sensitive input device of an electronic device, controlling the actuators to cause the actuators to change the forces applied to the touch-sensitive input device, determining second respective values representative of the forces applied by the actuators to the touch-sensitive input device, and determining when there is a fault at at least one of the actuators based on a change from the first respective values to the second respective values.

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practiced without these specific details. In other instances, well-known methods, procedures and components have not been described in detail so as not to obscure the example embodiments described herein. Also, the description is not to be considered as limited to the scope of the example embodiments described herein.

Tactile feedback is provided by movement of the touch-sensitive display, relative to a back of the portable electronic device, utilizing a plurality of actuators between the back and the touch-sensitive display. Missing or faulty actuators that fail to actuate or fail to actuate in a predictable manner may adversely affect tactile feedback that is provided. Such missing or faulty actuators may be difficult to detect or determine, however. The comparison of force values before and after changing the forces applied by the actuators facilitates detection of missing or faulty actuators. The results of the comparison may be reported by offloading the information or at the portable electronic device. Such a report may be, for example, a visual indication on the touch-sensitive display to identify the location of the missing or faulty actuator or actuators. Such feedback facilitates identification of problems, for example, during manufacture of the portable electronic device.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

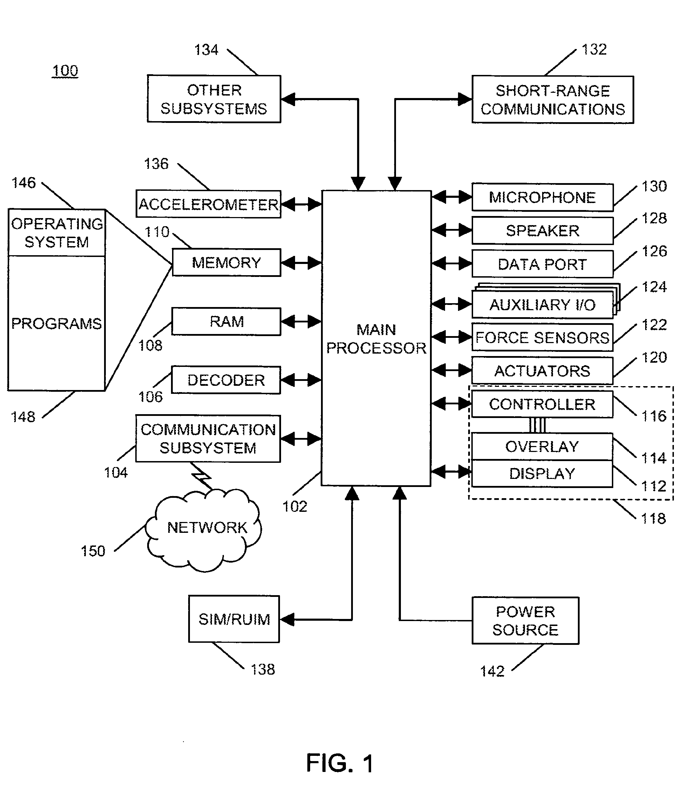

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. A power source 142, such as one or more rechargeable batteries or a port to another power supply, powers the portable electronic device 100.

The processor 102 interacts with other devices, such as a Random Access Memory (RAM) 108, memory 110, a display 112 with a touch-sensitive overlay 114 operably connected to an electronic controller 116 that together comprise a touch-sensitive display 118, actuators 120, force sensors 122, an auxiliary input/output (I/O) subsystem 124, a data port 126, a speaker 128, a microphone 130, short-range communications 132 and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, links, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into the memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, or surface acoustic wave (SAW) touch-sensitive display, as known in the art. A capacitive touch-sensitive display includes the display 112 and a capacitive touch-sensitive overlay 114. The overlay 114 may be an assembly of multiple layers in a stack including, for example, a substrate, LCD display 112, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The actuators 120 may be actuated, for example, by applying sufficient force to the touch-sensitive display 118 to overcome the actuation force of the actuators 120. The actuators 120 may be actuated by pressing anywhere on the touch-sensitive display 118. Input may be provided to the processor 102 when the actuators are actuated. Actuation of the actuators 120 provides the user with tactile feedback.

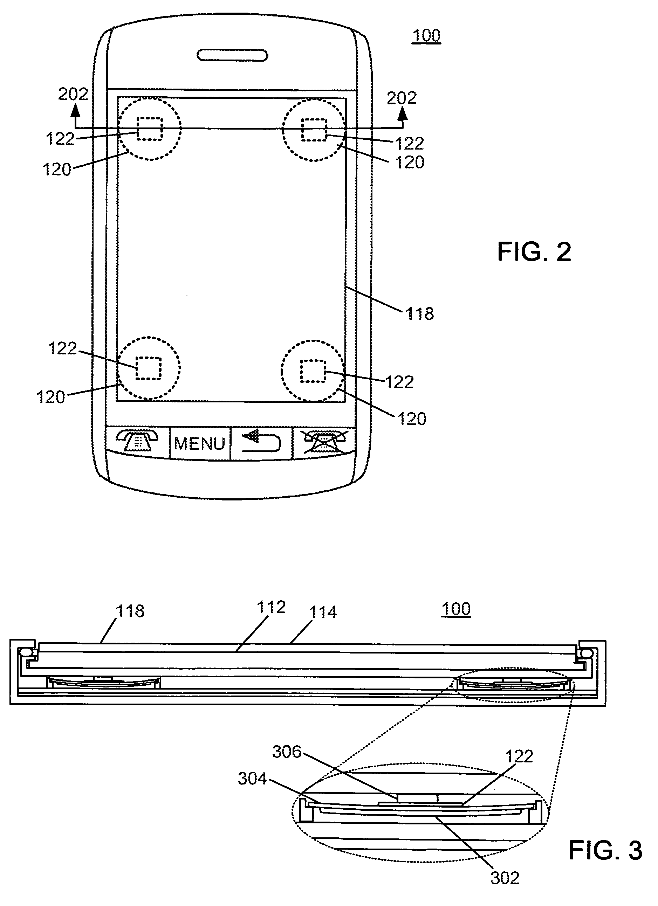

The actuators 120 may comprise any suitable number of, for example, piezoelectric (piezo) actuators that provide tactile feedback. FIG. 2 is a front view of an example of a portable electronic device 100. In the example shown in FIG. 2, the actuators 120 comprise four piezo actuators 120, each located near a respective corner of the touch-sensitive display 118. FIG. 3 is a sectional side view of the portable electronic device 100 through the line 202 of FIG 2. Each piezo actuator 120 is supported within the portable electronic device 100 such that contraction of the piezo actuators 120 applies a force against the touch-sensitive display 118, opposing a force externally applied to the display 118. Each piezo actuator 120 includes a piezoelectric device 302, such as a piezoelectric disk adhered to a metal substrate 304. An element 306 that is advantageously at least partially flexible and comprises, for example, hard rubber is located between the disk 302 and the touch-sensitive display 118. The element 306 does not substantially dampen the force applied to or on the touch-sensitive display 118. In the example shown in FIG. 2 and FIG. 3, the force sensors 122 comprise four force-sensors 122, each force sensor located between an element 306 and the metal substrate 304. The force sensors 122 are utilized to determine a value related to the force at each of the force sensors 122 when an external force is applied to the touch-sensitive display 118. The force sensors 122 are also utilized to determine values representative of the force, at the force sensors 122, applied by the piezo actuators 120. Thus, each force sensor is utilized to determine a value representative of the force applied by the respective piezo actuator 120 on the touch-sensitive display 118.

The metal substrate 304 bends when the piezoelectric device 302 contracts diametrically due to build up of charge at the piezoelectric device 302 or in response to an external force applied to the touch-sensitive display 118. The charge may be adjusted by varying the applied voltage or current, thereby controlling the forces applied by the piezo actuators 120 on the force sensors 122 and the touch-sensitive display 118. The charge on the piezo actuators 120 may be removed by a controlled discharge current that causes the piezoelectric devices 302 to expand diametrically, decreasing the force applied by the piezo actuators 120 on the force sensors 122 and the touch-sensitive display 118. Absent an external force applied to the touch-sensitive display 118 and absent a charge on the piezoelectric device 302, the piezo actuators 120 may be slightly bent due to a mechanical preload. Thus, forces may be applied to each of the force sensors 122, absent actuation of the piezo actuators 120 and absent an external applied force on the touch-sensitive display 118, due to the mechanical preload.

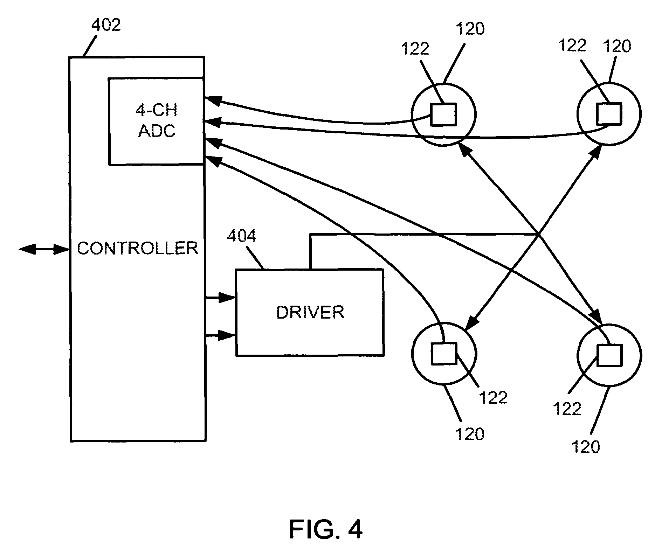

A functional block diagram of components of the portable electronic device 100 is shown in FIG. 4. In this example, each force sensor 122 is connected to a controller 402, which includes an amplifier and analog-to-digital converter (ADC). The force sensors 122 may be, for example, force-sensing resistors in an electrical circuit such that the resistance changes with force applied to the force sensors 122. As applied force on the touch-sensitive display 118 increases, the resistance decreases. This change is determined via the controller 116 for each of the force sensors 122, and a value representative of the force (i.e., the resistance) at each of the force sensors 122 is determined.

The actuators 120 are connected to a driver 404, which in the present example is a piezo driver that communicates with the controller 402. The controller 402 is also in communication with the main processor 102 of the portable electronic device 100 and may receive and provide signals to and from the main processor 102. The piezo actuators 120 and the force sensors 122 are operatively connected to the main processor 102 via the controller 402. The controller 402 controls the driver 404 that controls the current or voltage to the piezoelectric devices 302 and thus controls the charge and the force applied by the piezo actuators 120 on the touch-sensitive display 118. Each of the piezoelectric devices 302 may be controlled substantially equally and concurrently. Optionally, the piezoelectric devices 302 may be controlled separately. Tactile feedback is provided by controlling the piezoelectric devices 302 to, for example, simulate switches, actuators, keys or provide other feedback. For example, when an applied force, on the touch-sensitive display 118, exceeds a depression threshold, the charge at the piezo actuators 120 is modulated to impart a force on the touch-sensitive display 118 to simulate depression of a dome switch. When the applied force, on the touch-sensitive display 118, falls below a release threshold, after simulation of depression of a dome switch, the charge at the piezo actuators 120 is modulated to impart a force, by the piezo actuators 120, to simulate release of a dome switch.

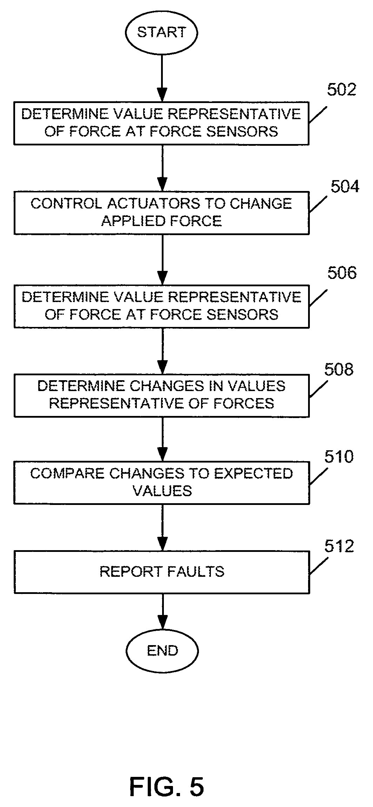

A flowchart illustrating a method of testing the electronic device 100 is shown in FIG. 5. The method may be carried out by software executed by, for example, the processor 102. Coding of software for carrying out such a method is within the scope of a person of ordinary skill in the art given the present description. The method illustrated in FIG. 5 may be carried out during manufacture of the portable electronic device 100 to test the actuators 120 and force sensors 122 or may carried out at any other suitable time. Optionally, the method may be carried out in response to selection of an option to test the actuators 120 and force sensors 122.

The value representative of force at each of the force sensors 122 is determined 502 based on signals from the force sensors 122. As described above, the resistance value is representative of the force at the respective force sensor 122.

The actuators 120 are controlled 504 to change the force applied to the touch-sensitive display 118, and therefore to the force sensors 122. When the force is changed, the value representative of force at each of the force sensors 122 is again determined 506 based on signals from the force sensors 122. For each of the force sensors 122, the change in value representative of force from the value determined at 502 to the value determined at 506, is determined 508. The change in value representative of force at each of the force sensors 122 is compared 510 to an expected value to determine whether or not there is a fault with the respective actuator 120 or force sensor 122. Any fault is reported 512.

Continued reference is made to FIG. 5 to describe one example of the method of testing the electronic device 100. According to this example, the method is carried out during manufacture of the portable electronic device 100.

The value representative of force at each of the force sensors 122 is determined 502 absent an external force on the touch-sensitive display 100 and when the actuators 120 are not charged. The resistance value at each of the force sensors 122 is representative of the force at the respective force sensor 122 and, in this example, is a result of the mechanical preload only.

The actuators 120 are controlled 504 by applying a voltage to the actuators 120 to charge the actuators 120 and apply a force to the touch-sensitive display 118. The value representative of force at each of the force sensors 122 is again determined 506 based on signals from the force sensors 122. For each force sensor 122, the change in value representative of force, from the value determined at 502 to the value determined at 506, is determined 508. The change in values is expected to represent the increase in force from the force caused by the mechanical preload only to the force applied by charging the actuators 120. Based on a comparison 510 of the change in forces to an expected value, a determination is made whether or not an actuator or actuators 120 or the respective force sensor or force sensors 122 are faulty or missing. Any faults are reported 512. For example, when the change in the value representative of force, determined from one of the force sensors 122, differs from the expected change by a threshold amount, a fault is determined at the corresponding actuator 120 or force sensor 122. Alternatively when the change in value representative of force, determined from one of the force sensors 122, does not represent an increase in force, or represents an increase in force that is less than a threshold amount, a fault is determined at the corresponding actuator 120 or force sensor 122. The results are reported 512 in a suitable manner. For example, the results may be stored on the portable electronic device 100 for offloading or may be sent to another electronic device for displaying results. Alternatively, the touch-sensitive display 118 may be utilized to display the results of the test. For example, the touch-sensitive display may display an indication that the actuators 120 and force sensors 122 are working or are not working, such as by displaying a colour (i.e., green) to represent that all actuators 120 and force sensors 122 are operating as expected and displaying an alternate colour (i.e., red) to represent that one or more actuators 120 or force sensors 122 are faulty. The location of a faulty actuator 120 or force sensor may also be displayed.

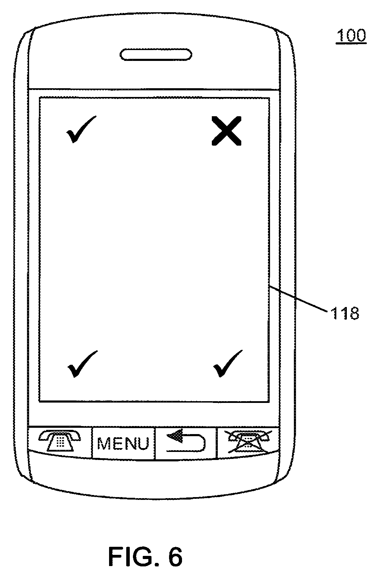

FIG. 6 shows an example of a screen shot of the portable electronic device 100 illustrating a location of a faulty actuator 120 or force sensor 122. In the example shown in FIG. 6, a check mark is displayed on the touch-sensitive display 118 for each actuator 120 and force sensor 122 that are operating as expected based on the values representative of the forces. An X mark is displayed for each actuator 120 or force sensor 122 that is faulty or missing. The check marks and X marks are displayed near respective corners to represent the location(s) of the faulty or missing actuator(s) 120 or force sensor(s). In the example of FIG. 6, the actuator 120 or the force sensor 122 in the upper righthand corner, in the orientation shown, is reported as faulty or missing. The remaining actuators 120 and force sensors 122 are not faulty or missing.

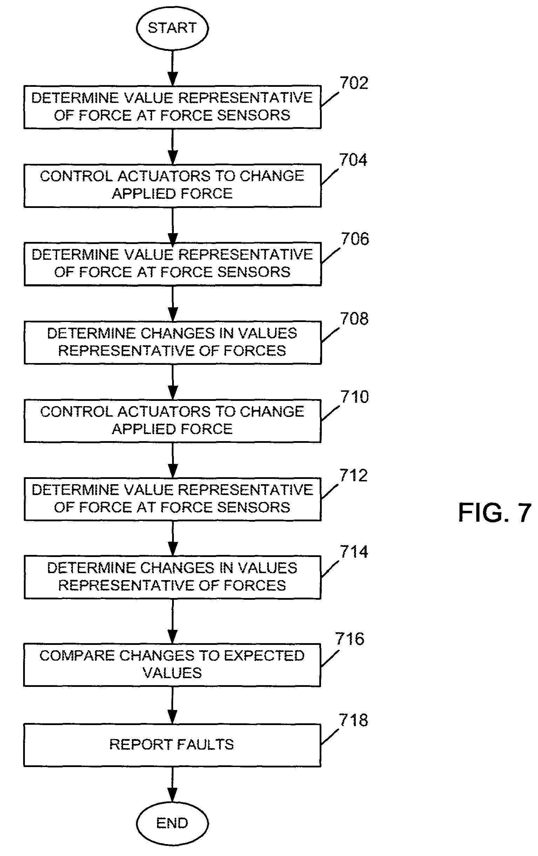

A flowchart illustrating another method of testing the electronic device 100 is shown in FIG. 7. The method may be carried out by software executed by, for example, the processor 102. Coding of software for carrying out such a method is within the scope of a person of ordinary skill in the art given the present description. The method illustrated in FIG. 7 may be carried out during manufacture of the portable electronic device 100 to test the actuators 120 and force sensors 122 or may carried out at any other suitable time. Optionally, the method may be carried out in response to selection of an option to test the actuators 120 and force sensors 122.

The value representative of force at each of the force sensors 122 is determined 702 based on signals from the force sensors 122. As described above, the resistance value is representative of the force at the respective force sensor 122.

The actuators 120 are controlled 704 to change the force applied to the touch-sensitive display 118, and therefore to the force sensors 122. When the force is changed, the value representative of force at each of the force sensors 122 is again determined 706 based on signals from the force sensors 122. For each of the force sensors 122, the change in value representative of force from the value determined at 702 to the value determined at 706, is determined 708.

The actuators 1 20 are again controlled 710 to change the force applied to the touch-sensitive display 118, and therefore to the force sensors 1 22. When the force is changed, the value representative of force at each of the force sensors 122 is again determined 712 based on signals from the force sensors 122. For each of the force sensors 122, the change in value representative of force from the value determined at 708 to the value determined at 712, is determined 714.

The changes in value representative of force at each of the force sensors 122, as determined at 708 and 714, are compared 716 to expected changes to determine whether or not the respective actuator 120 or force sensor 122 is faulty or missing. Any missing or faulty actuator(s) 120 or force sensor(s) 122 are reported 718.

Continued reference is made to FIG. 7 to describe one example of the method of testing the electronic device 100. According to this example, the method is carried out during manufacture of the portable electronic device 100.

The value representative of force at each of the force sensors 122 is determined 702 absent an external force on the touch-sensitive display 100 and when the actuators 120 are not charged.

The actuators 120 are controlled 704 by applying a voltage to the actuators 120 to charge the actuators 120 and apply a force to the touch-sensitive display 118. The value representative of force at each of the force sensors 122 is again determined 706 based on signals from the force sensors 122. For each force sensor 122, the change in value representative of force, from the value determined at 702 to the value determined at 706, is determined 708.

The actuators 120 are again controlled 710 by discharging the actuators 120 to return the force to the force when the actuators are not actuated and there is no external force on the touch-sensitive display 118. The value representative of force at each of the force sensors 122 is again determined 712 based on signals from the force sensors 122. For each force sensor 122, the change in value representative of force, from the value determined at 708 to the value determined at 712, is determined 714.

The changes in values determined at 708 are expected to represent the increase in force from the force caused by the mechanical preload only to the force applied by charging the actuators 120. The changes in values determined at 714 are expected to represent the decrease in force from the force applied by the charged actuators 120 to the force caused by the mechanical preload only. Based on comparisons 716 of the changes in forces to expected values, a determination is made whether or not an actuator or actuators 120 or the corresponding force sensor 122 or force sensors 122 are faulty or missing. Any fault is reported 718.

In this example, changes in forces are determined from mechanical preload to charged actuators 120 and from charged actuators 120 to mechanical preload. Faulty or missing actuators 120 or force sensors 122 may be identified and, additionally, any debris or other material that may inhibit the decrease in force when the actuators are discharged may be detected.

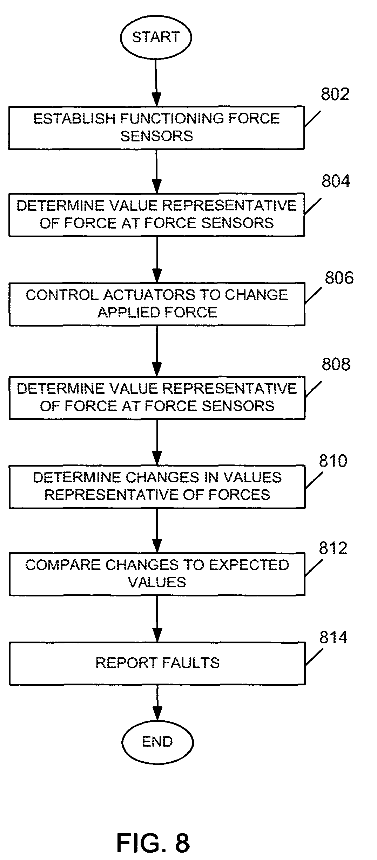

A flowchart illustrating another method of testing the electronic device 100 is shown in FIG. 8. The method may be carried out by software executed by, for example, the processor 102. Coding of software for carrying out such a method is within the scope of a person of ordinary skill in the art given the present description. The method illustrated in FIG. 8 may be carried out during manufacture of the portable electronic device 100 to test the actuators 120 or may carried out at any other suitable time. Optionally, the method may be carried out in response to selection of an option to test the actuators 120.

The force sensors 122 that are functioning are established when an external force is applied to the touch-sensitive display 118. For example, the value representative of force may be determined before and during application of an external force to the touch-sensitive display 118. The external force may be applied, for example, by a machine for applying a force of known magnitude. When the value representative of force, determined from the signals from a force sensor 122, increases by an expected amount based on the magnitude of the external force, from before application of the external force to after application of the external force, functioning of the force sensor is established. Functioning of each of the force sensors 122 is therefore established.

Optionally, the externally applied force may be controlled such that multiple, forces of different known magnitudes are applied to establish that each force sensor 122 is functioning.

The remaining process is similar to that described above with reference to FIG. 5 and therefore the remainder of the process is not further described herein. In the example of FIG. 8, however, the force sensors that are functioning are established and a fault determined based on the comparison of changes at 812 may be determined to be caused by a faulty actuator 120 when the force sensor 122 has been established as functioning. Any missing or faulty actuator or actuators 120 are therefore reported at 814.

In yet a further embodiment, whether or not the force sensors 122 are functioning may be established prior to the process illustrated in FIG. 7. Therefore, a fault determined based on the comparisons of changes at 710 and 716 may be determined to be caused by a faulty actuator 120 when the force sensor 122 has been established as functioning. Any missing or faulty actuator or actuators 120 are reported at 718.

In the examples described above and shown in FIG. 1, a touch-sensitive display is utilized. The present disclosure is not limited to a touch-sensitive display, however, as any touch-sensitive input device may be utilized. A touch-sensitive input device may be a capacitive touch-sensitive input device, a resistive touch-sensitive input device, a device that is force-sensitive for detecting when a force is applied by a touch, or any other suitable device.

Tactile feedback is provided by movement of the touch-sensitive display, relative to a back of the portable electronic device, utilizing a plurality of actuators and force sensors between the back and the touch-sensitive display. Missing or faulty actuators that fail to actuate or fail to actuate in a predictable manner may adversely affect tactile feedback that is provided. Missing or faulty force sensors may also adversely affect tactile feedback. Such missing or faulty actuators or force sensors may be difficult to detect or determine, however. The comparison of force values before and after changing the forces applied by the actuators facilitates detection of missing or faulty actuators or force sensors. The results of the comparison may be reported by offloading the information or at the portable electronic device. Such a report may be, for example, a visual indication on the touch-sensitive display to identify the location of the missing or faulty actuator(s) or corresponding force sensor(s). Such feedback facilitates identification of problems, for example, during manufacture of the portable electronic device.

The described embodiments are to be considered in all respects only as illustrative and not restrictive. The scope of the present disclosure is, therefore, indicated by the appended claims rather than by the foregoing description. All changes that come within the meaning of the claims are to be embraced within their scope.

## Claims

1. A method of testing the actuators of an electronic device (100), comprising:
determining first respective values representative of forces applied by a plurality of actuators to a touch-sensitive display (118) of the electronic device (100), the plurality of actuators being arranged between the back of the electronic device (100) and the touch-sensitive display (118);
controlling the actuators, by a controller (402) of the electronic device (100), to cause the actuators (120) to change the forces applied to the touch-sensitive display (118) by applying a voltage to the actuators (120);
determining second respective values representative of the forces applied by the actuators (120) to the touch-sensitive display (118); and
determining when there is a fault in one of the actuators (120) by comparing changes from the first respective values to the second respective values to an expected value.

2. The method according to claim 1, wherein the electronic device (100) comprises a plurality of force sensors (122), ones of the force sensors (122) corresponding with respective ones of the actuators (120) for detecting the first values and the second values.

3. The method according to claim 2, wherein determining comprises determining when there is a fault at at least one of the actuators (120) and corresponding force sensors (122).

4. The method according to claim 1, comprising establishing that the force sensors (122) are functioning prior to controlling the actuators (120) by comparing the force values before and after changing the forces applied by the actuators.

5. The method according to claim 1, wherein the actuators (120) comprise piezoelectric actuators and controlling the actuators comprises charging the actuators.

6. The method according to claim 1, wherein the actuators (120) comprise piezoelectric actuators and controlling the actuators (120) comprises discharging the actuators (120).

7. The method according to claim 1, comprising determining a location of the fault based on the change from the first respective values to the second respective values to an expected value.

8. The method according to claim 7, comprising reporting the location of the fault.

9. The method according to claim 1, comprising, after detecting second respective values representative of the forces:
further controlling the actuators (120), by a controller (402) of the electronic device (100), to further change the force applied to the touch-sensitive display (118);
detecting third respective values representative of the forces applied by the actuators (120) to the touch-sensitive display (118); and
determining when there is a fault in one of the actuators (120) by comparing further changes from the second respective values to the third respective values to an expected value.

10. The method according to claim 9, comprising reporting results of the comparison of the second values to the third values.

11. The method according to claim 9, wherein controlling the actuators (120) comprises charging the actuators (120) to increase a force applied to the touch-sensitive display (118).

12. The method according to claim 9, wherein further controlling the actuators (120) comprises discharging the actuators (120) to decrease a force applied to the touch-sensitive display (118).

13. The method according to claim 1, comprising displaying information on the touch-sensitive display (118) to indicate a location of the fault.

14. A computer-readable medium having computer-readable code executable by at least one processor of a portable electronic device to perform the method of claim 1.

15. An electronic device (100) comprising:
a touch-sensitive display (118);
a plurality of actuators (120), being arranged between the back of the electronic device (100) and the touch-sensitive display (118), configured to apply forces to the touch-sensitive display (118);
force sensors (122) configured to determine values representative of the forces applied by the plurality of actuators (120); and
at least one processor (102) operably connected to the touch-sensitive display (118), the actuators (120), and the force sensors (122) and configured to carry out the method of claim 1.

## Patentansprüche

1. Ein Verfahren zum Testen von Aktuatoren einer elektronischen Vorrichtung (100), umfassend:
Bestimmen erster jeweiliger Werte, die repräsentativ sind für Kräfte, die durch eine Vielzahl von Aktuatoren auf eine berührungsempfindliche Anzeige (118) der elektronischen Vorrichtung (100) angewendet werden, wobei die Vielzahl von Aktuatoren angeordnet ist zwischen der Rückseite der elektronischen Vorrichtung (100) und der berührungsempfindlichen Anzeige (118);
Steuern der Aktuatoren, durch eine Steuerung (402) der elektronischen Vorrichtung (100), um die Aktuatoren (120) zu veranlassen, die Kräfte zu ändern, die auf die berührungsempfindliche Anzeige (118) angewendet werden, durch Anwenden einer Spannung auf die Aktuatoren (120);
Bestimmen von zweiten jeweiligen Werten, die repräsentativ sind für die Kräfte, die durch die Aktuatoren (120) auf die berührungsempfindliche Anzeige (118) angewendet werden; und
Bestimmen, ob es einen Mangel in einem der Aktuatoren (120) gibt durch Vergleichen von Änderungen von den ersten jeweiligen Werten zu den zweiten jeweiligen Werten zu einem erwarteten Wert.

2. Das Verfahren nach Anspruch 1, wobei die elektronische Vorrichtung (100) eine Vielzahl von Kraftsensoren (122) umfasst, wobei diese Kraftsensoren (122) mit jeweiligen der Aktuatoren (120) zum Detektieren der ersten Werte und der zweiten Werte korrespondieren.

3. Das Verfahren nach Anspruch 2, wobei das Bestimmen ein Bestimmen umfasst, ob es einen Mangel bei zumindest einem der Aktuatoren (120) und den korrespondierenden Kraftsensoren (122) gibt.

4. Das Verfahren nach Anspruch 1, umfassend ein Etablieren, dass die Kraftsensoren (122) funktionieren vor dem Steuern der Aktuatoren (120) durch Vergleichen der Kraftwerte vor und nach Ändern der Kräfte, die durch die Aktuatoren angewendet werden.

5. Das Verfahren nach Anspruch 1, wobei die Aktuatoren (120) piezoelektrische Aktuatoren umfassen und das Steuern der Aktuatoren ein Laden der Aktuatoren umfasst.

6. Das Verfahren nach Anspruch 1, wobei die Aktuatoren (120) piezoelektrische Aktuatoren umfassen und das Steuern der Aktuatoren (120) ein Entladen der Aktuatoren (120) umfasst.

7. Das Verfahren nach Anspruch 1, umfassend ein Bestimmen einer Position des Mangels basierend auf der Änderung von den ersten jeweiligen Werten zu den zweiten jeweiligen Werten zu einem erwarteten Wert.

8. Das Verfahren nach Anspruch 7, umfassend ein Berichten der Position des Mangels.

9. Das Verfahren nach Anspruch 1, umfassend nach dem Detektieren der zweiten jeweiligen Werte, die repräsentativ sind für die Kräfte:
ein weiteres Steuern der Aktuatoren (120) durch eine Steuerung (402) der elektronischen Vorrichtung (100), um weiter die Kraft zu ändern, die auf die berührungsempfindliche Anzeige (118) angewendet wird;
Detektieren von dritten jeweiligen Werten, die repräsentativ sind für die Kräfte, die durch die Aktuatoren (120) auf die berührungsempfindliche Anzeige (118) angewendet werden; und
Bestimmen, ob es einen Mangel in einem der Aktuatoren (120) gibt durch Vergleichen weiterer Änderungen von den zweiten jeweiligen Werten zu den dritten jeweiligen Werten zu einem erwarteten Wert.

10. Das Verfahren nach Anspruch 9, umfassend Berichte der Resultate des Vergleichs der zweiten Werte mit den dritten Werten.

11. Das Verfahren nach Anspruch 9, wobei das Steuern der Aktuatoren (120) ein Laden der Aktuatoren (120) umfasst, um eine Kraft zu erhöhen, die auf die berührungsempfindliche Anzeige (118) angewendet wird.

12. Das Verfahren nach Anspruch 9, wobei das weitere Steuern der Aktuatoren (120) ein Entladen der Aktuatoren (120) umfasst, um eine Kraft zu vermindern, die auf die berührungsempfindliche Anzeige (118) angewendet wird.

13. Das Verfahren nach Anspruch 1, umfassend ein Anzeigen von Information auf der berührungsempfindlichen Anzeige (118), um eine Position des Mangels anzugeben.

14. Ein computerlesbares Medium mit computerlesbarem Code, der durch zumindest einen Prozessor einer tragbaren elektronischen Vorrichtung ausführbar ist, um das Verfahren des Anspruchs 1 durchzuführen.

15. Eine elektronische Vorrichtung (100), umfassend:
eine berührungsempfindliche Anzeige (118);
eine Vielzahl von Aktuatoren (120), die angeordnet sind zwischen der Rückseite der elektronischen Vorrichtung (100) und der berührungsempfindlichen Anzeige (118), die konfiguriert sind, um Kräfte auf die berührungsempfindliche Anzeige (118) anzuwenden;
Kraftsensoren (122), die konfiguriert sind, um Werte zu bestimmen, die repräsentativ sind für Kräfte, die durch die Vielzahl von Aktuatoren (120) angewendet werden; und
zumindest einen Prozessor (102), der betriebsfähig mit der berührungsempfindlichen Anzeige (118), den Aktuatoren (120) und den Kraftsensoren (122) verbunden ist und konfiguriert ist, um das Verfahren des Anspruchs 1 durchzuführen.

## Revendications

1. Procédé permettant de tester les actionneurs d'un dispositif électronique (100), comprenant :
la détermination de premières valeurs respectives représentatives de forces appliquées par une pluralité d'actionneurs sur un afficheur tactile (118) du dispositif électronique (100), la pluralité d'actionneurs étant agencée entre l'arrière du dispositif électronique (100) et l'afficheur tactile (118) ;
la commande des actionneurs, par un dispositif de commande (402) du dispositif électronique (100), pour amener les actionneurs (120) à changer les forces appliquées sur l'afficheur tactile (118) en appliquant une tension sur les actionneurs (120) ;
la détermination de deuxièmes valeurs respectives représentatives des forces appliquées par les actionneurs (120) sur l'afficheur tactile (118) ; et
la détermination de quand il y a un défaut dans un des actionneurs (120) en comparant des changements des premières valeurs respectives aux deuxièmes valeurs respectives à une valeur attendue.

2. Procédé selon la revendication 1, dans lequel le dispositif électronique (100) comprend une pluralité de capteurs de force (122), certains des capteurs de force (122) correspondant à certains respectifs des actionneurs (120) pour détecter les premières valeurs et les deuxièmes valeurs.

3. Procédé selon la revendication 2, dans lequel la détermination comprend la détermination de quand il y a un défaut au niveau d'au moins un des actionneurs (120) et des capteurs de force correspondants (122).

4. Procédé selon la revendication 1, comprenant l'établissement que les capteurs de force (122) fonctionnent avant de commander les actionneurs (120) en comparant les valeurs de force avant et après le changement des forces appliquées par les actionneurs.

5. Procédé selon la revendication 1, dans lequel les actionneurs (120) comprennent des actionneurs piézoélectriques et la commande des actionneurs comprend la charge des actionneurs.

6. Procédé selon la revendication 1, dans lequel les actionneurs (120) comprennent des actionneurs piézoélectriques et la commande des actionneurs (120) comprend la décharge des actionneurs (120).

7. Procédé selon la revendication 1, comprenant la détermination d'une localisation du défaut sur la base du changement des premières valeurs respectives aux deuxièmes valeurs respectives à une valeur attendue.

8. Procédé selon la revendication 7, comprenant le rapport de la localisation du défaut.

9. Procédé selon la revendication 1, comprenant, après la détection de deuxièmes valeurs respectives représentatives des forces :
la commande complémentaire des actionneurs (120), par un dispositif de commande (402) du dispositif électronique (100), pour soumettre à un changement complémentaire la force appliquée sur l'afficheur tactile (118) ;
la détection de troisièmes valeurs respectives représentatives des forces appliquées par les actionneurs (120) sur l'afficheur tactile (118) ; et
la détermination de quand il y a un défaut dans un des actionneurs (120) en comparant des changements complémentaires des deuxièmes valeurs respectives aux troisièmes valeurs respectives à une valeur attendue.

10. Procédé selon la revendication 9, comprenant le rapport de résultats de la comparaison des deuxièmes valeurs aux troisièmes valeurs.

11. Procédé selon la revendication 9, dans lequel la commande des actionneurs (120) comprend la charge des actionneurs (120) pour augmenter une force appliquée sur l'afficheur tactile (118).

12. Procédé selon la revendication 9, dans lequel la commande complémentaire des actionneurs (120) comprend la décharge des actionneurs (120) pour diminuer une force appliquée sur l'afficheur tactile (118).

13. Procédé selon la revendication 1, comprenant l'affichage d'informations sur l'afficheur tactile (118) pour indiquer une localisation du défaut.

14. Support lisible par ordinateur ayant un code lisible par ordinateur exécutable par au moins un processeur d'un dispositif électronique portable pour effectuer le procédé selon la revendication 1.

15. Dispositif électronique (100) comprenant :
un afficheur tactile (118) ;
une pluralité d'actionneurs (120), qui est agencée entre l'arrière du dispositif électronique (100) et l'afficheur tactile (118), configurée pour appliquer des forces sur l'afficheur tactile (118) ;
des capteurs de force (122) configurés pour déterminer des valeurs représentatives des forces appliquées par la pluralité d'actionneurs (120) ; et
au moins un processeur (102) connecté fonctionnellement à l'afficheur tactile (118), aux actionneurs (120), et aux capteurs de force (122) et configuré pour réaliser le procédé selon la revendication 1.
